(19) Europäisches Patentamt
European Patent Office
Office européen des brevets

(11) Numéro de publication : **0 483 170 B1**

(12) # FASCICULE DE BREVET EUROPEEN

(45) Date de publication du fascicule du brevet : **18.11.93 Bulletin 93/46**

(51) Int. Cl.$^5$ : **C01B 15/037,** D21C 9/16, D06L 3/02

(21) Numéro de dépôt : **90909593.7**

(22) Date de dépôt : **12.07.90**

(86) Numéro de dépôt international : **PCT/BE90/00041**

(87) Numéro de publication internationale : **WO 91/01268 07.02.91 Gazette 91/04**

(54) **SOLUTION AQUEUSE STABILISEE DE PEROXYDE D'HYDROGENE ET PROCEDE DE PREPARATION.**

(30) Priorité : **20.07.89 BE 8900796**

(43) Date de publication de la demande : **06.05.92 Bulletin 92/19**

(45) Mention de la délivrance du brevet : **18.11.93 Bulletin 93/46**

(84) Etats contractants désignés : **AT CH DE DK ES FR GB IT LI LU NL SE**

(56) Documents cités :
**EP-A- 49 808**
**GB-A- 1 383 741**
**US-A- 4 454 224**

(73) Titulaire : **SOLVAY INTEROX (Société Anonyme)**
**Rue du Prince Albert, 33**
**B-1050 Bruxelles (BE)**

(72) Inventeur : **VAN HEMELRIJK, Dirck**
**Vermeylenlaan 21/28**
**B-2050 Antwerpen (BE)**

(74) Mandataire : **Decamps, Alain René François et al**
**SOLVAY & Cie S.A. Département de la Propriété Industrielle Rue de Ransbeek, 310**
**B-1120 Bruxelles (BE)**

EP 0 483 170 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des solutions aqueuses de peroxyde d'hydrogène stabilisées contre la décomposition en oxygène et en eau au moyen de compositions contenant des stabilisants organiques appartenant à la famille des acides aminopolycarboxyliques.

Le procédé de stabilisation de solutions aqueuses de peroxyde d'hydrogène au moyen de tels stabilisants s'inscrit également dans la portée de l'invention.

Il est connu de mettre en oeuvre l'acide 1,3-diamino-2-hydroxypropane-N,N,N',N'-tétraacétique pour stabiliser les percomposés (GB-1383741 (CIBA-GEIGY, AG,) * page 1, lignes 44 à 61 *). Ce composé n'est toutefois pas stable en présence des percomposés et se transforme rapidement au cours du stockage en donnant naissance à des produits de dégradation qui ne présentent plus d'effet stabilisant pour les solutions de percomposés.

L'invention a pour objectif des solutions de peroxyde d'hydrogéne efficacement stabilisées à long terme par l'incorporation d'une composition contenant un acide aminopolycarboxylique.

A cet effet, l'invention concerne une solution aqueuse de peroxyde d'hydrogène stabilisée au moyen d'une composition contenant un mélange d'un pyrophosphate de métal alcalin ou alcalino-terreux avec un stabilisant appartenant à la classe des acides aminopolycarboxyliques, dans laquelle le stabilisant est un acide aminopolycarboxylique répondant à la formule générale suivante :

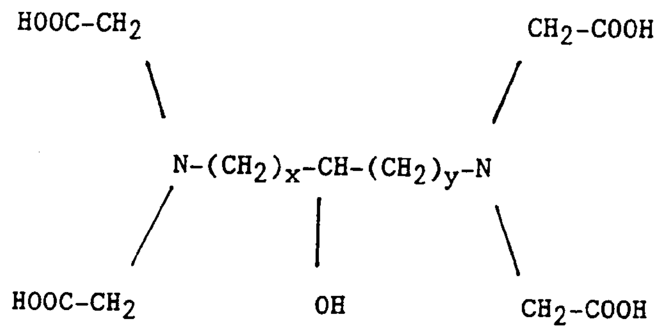

où

x est un nombre entier égal à 0, 1 ou 2 et
y est aussi un nombre entier égal à 0, 1 ou 2;

ou un sel de cet acide.

Par solution aqueuse de peroxyde d'hydrogène, on entend désigner toute solution aqueuse de peroxyde d'hydrogène dont la concentration pondérale est comprise entre 0,1 et 99 g $H_2O_2$/100 g de solution et, de préférence, entre 0,5 et 95 %. Avantageusement, cette solution peut être une solution commerciale de peroxyde d'hydrogène de concentration pondérale comprise entre 25 et 70 g $H_2O_2$/100 g de solution.

Il est le plus souvent avantageux que, dans la formule générale de l'acide aminopolycarboxylique, les nombres x et y soient tels que leur somme ne dépasse pas 3 et, de préférence, ne dépasse pas 2.

Selon une autre variante du procédé selon l'invention, qui est préférée, l'acide aminopolycarboxylique qui est mis en oeuvre est tel que les nombres x et y intervenant dans sa formule sont égaux.

Un acide aminopolycarboxylique qui a donné des résultats particulièrement intéressants est l'acide 1,3-diamino-2-hydroxypropane-N,N,N',N'-tétraacétique.

Selon une variante supplémentaire du procédé selon l'invention, les nombres x et y de la formule générale de l'acide aminopolycarboxylique sont tels que l'un d'eux est nul. Le cas échéant, il est souhaitable que l'autre nombre soit différent de zéro, par exemple égal à 1.

Selon l'invention, les sels de l'acide aminopolycarboxylique comprennent les sels résultant de la substitution de l'atome d'hydrogène d'un ou de plusieurs des quatre groupements carboxyliques de l'acide aminopolycarboxylique, par un cation métallique ou par l'ammonium. Le cation métallique est de préférence un cation de métal alcalin ou alcalino-terreux. Les métaux alcalins et l'ammonium sont spécialement recommandés.

Le terme aminopolycarboxylate désignera ci-aprés les acides aminopolycarboxyliques et leurs sels conformes à l'invention.

Dans les compositions de stabilisants conformes à l'invention, la proportion pondérale de pyrophosphate et d'amino- polycarboxylate peut varier entre 0,2 à 4,0 et, de préférence entre 0,7 à 1,3. D'excellents résultats ont été obtenus pour un rapport pondéral pyrophosphate/aminopolycarboxylate égal à 1,0.

La teneur optimale en composition pyrophosphate-aminopolycarboxylate dans les solutions aqueuses de peroxyde d'hydrogène dépend de divers paramètres, notamment de la concentration de la solution en peroxyde d'hydrogène, de son pH ainsi que de l'aminocarboxylate sélectionné. En pratique, il est généralement souhaitable que la solution aqueuse de peroxyde d'hydrogène contienne au moins 0,5 mg de composition pyrophosphate-aminopoly- carboxylate par kg de solution, et de préférence pas plus de 1500 mg. Les teneurs préférées se si tuent entre 1 et 300 mg.

L'invention s'applique indifféremment aux solutions de peroxyde d'hydrogène qui sont acides, neutres ou basiques. Elle trouve notamment une application avantageuse pour les solutions acides dont le pH est compris entre 2 et 5.

Des exemples de telles solutions sont les solutions de peroxyde d'hydrogène utilisées pour le nettoyage des verres d'optique, en particulier les lentilles de contact, les solutions d'$H_2O_2$ pour l'hydrométallurgie, en particulier en extraction des métaux par lixiviation des minerais, les solutions d'$H_2O_2$ pour la gravure, le décapage et le polissage des métaux (par exemple, les bains pour le polissage chimique du cuivre, tels que ceux décrits dans la demande de brevet FR-A-87.13407 (SOLVAY & Cie)), les solutions d'$H_2O_2$ utilisées pour la protection de l'environnement, comme celles utilisées pour détoxiquer les effluents liquides ou gazeux et celles utilisées pour la purification des eaux, les solutions d'$H_2O_2$ utilisées dans l'industrie alimentaire, et, en particulier, celles servant à la désinfection des emballages et des récipients.

Selon une forme de réalisation avantageuse de l'invention, la solution aqueuse de peroxyde d'hydrogène peut être un bain de blanchiment aqueux contenant du peroxyde d'hydrogène en concentration comprise entre 0,5 et 50 g $H_2O_2$/100 g de solution. Des exemples de tels bains de blanchiment sont les liqueurs de lavage ou de blanchiment au peroxyde d'hydrogène des matières textiles et les liqueurs de blanchiment au peroxyde d'hydrogène des pâtes à papier.

Dans les techniques pour le blanchiment des pâtes à papier au moyen de solutions aqueuses de peroxyde d'hydrogène, il peut parfois se révéler avantageux de prétraiter la pâte à papier à blanchir par une composition pyrophosphate-aminopolycarboxylate du type de celles utilisées conformément à l'invention telles que définies plus haut, avant d'effectuer le traitement de blanchiment au peroxyde d'hydrogène. Cette dernière technique est particulièrement intéressante lorsque la pâte à blanchir appartient à la classe des pâtes à haut rendement.

L'invention concerne aussi un procédé de stabilisation d'une solution aqueuse de peroxyde d'hydrogène selon lequel on incorpore dans la solution aqueuse une composition contenant un mélange d'un pyrophosphate de métal alcalin ou alcalino-terreux avec un stabilisant appartenant à la classe des acides aminopolycarboxyliques répondant à la formule générale suivante :

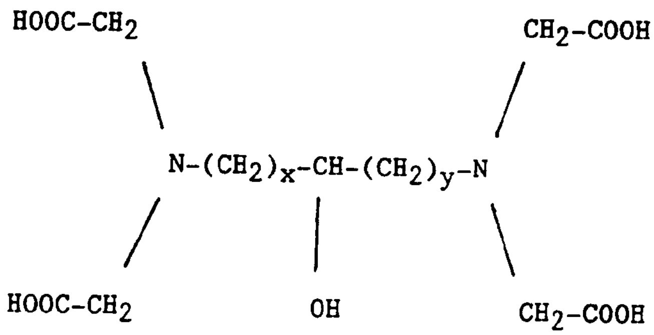

où

x est un nombre entier égal à 0, 1 ou 2 et
y est aussi un nombre entier égal à 0, 1 ou 2;

ou des sels de ces acides.

L'invention présente l'avantage de fournir des solutions aqueuses de peroxyde d'hydrogène dont la stabilité à long terme est améliorée vis-à-vis de la décomposition induite par les cations de métaux lourds et de transition par rapport aux stabilisants organiques et inorganiques connus. Les exemples non limitatifs qui suivent sont donnés dans le but d'illustrer l'invention.

Exemples 1R à 14

. Passivation de l'appareillage :

L'appareillage utilisé dans tous les exemples qui vont suivre a subi au préalable un traitement de passivation dans le but d'éliminer l'effet perturbateur des impuretés adsorbées sur la surface en contact avec les solutions de peroxyde d'hydrogène stabilisées mises en oeuvre.

Pour ce faire, on a immergé toute la verrerie susceptible d'être mise en contact avec l'$H_2O_2$ dans une solution aqueuse de $HNO_3$ à 65 % en poids et on a maintenu l'ensemble à 75°C pendant 24 heures.

. Tests de stabilité à long terme

Dans un erlenmeyer de 1 l passivé comme décrit ci-dessus on a mélangé une solution aqueuse de peroxyde d'hydrogène à 85 % en poids, de l'eau bidistillée, le stabilisant et une solution d'ions métalliques contenant du $FeCl_3$ et du $CuCl_2$ dans un rapport de 5 moles de $FeCl_3$ à 1 mole de $CuCl_2$. Les quantités des divers composants mis en oeuvre ont été calculées pour constituer 2 types de mélange final contenant respectivement 35 g $H_2O_2$/100 g de solution et 70 g $H_2O_2$/100 g de solution ainsi que 5 mg de métaux (exprimés en Fe + Cu) par kg de solution et 250 mg de stabilisant (à 100% de matière active) par kg de solution.

Les résultats obtenus sont donnés aux tableaux I ($H_2O_2$ à 35 % en poids) et II ($H_2O_2$ à 70% en poids) qui suivent.

Dans les essais 5R, 7, 12R et 14 où on a mis en oeuvre un mélange de deux stabilisants, il a été introduit 125 mg de chacun des deux stabilisants par kg de solution.

A titre de stabilisants, on a mis en oeuvre, d'une part, l'acide 1,3-diamino-2-hydroxypropane-N,N,N',N'-tétraacétique (ci-après dénommé DPTA) conformément à l'invention et, d'autre part, un certain nombre de stabilisants connus non conformes à l'invention, appartenant à 2 groupes distincts, à savoir un polyphosphonate fabriqué par la firme Monsanto et vendu sous la marque de fabrique DEQUEST, et deux stabilisants de type inorganique. Ces divers stabilisants ont été mis en oeuvre seuls ou en mélange et ont été désignés par les abréviations qui suivent :

PYRO : $Na_2H_2P_2O_7$ : pyrophosphate de sodium,
STAN : $Na_2SnO_3$ : stannate de sodium.
D2066 : diéthylènetriaminepenta (méthylènephosphonate de Na), où l'abréviation D2066 symbolise le produit DEQUEST®, de la firme Monsanto.

Tableau I

| N° de l'essai | Nature du stabilisant | Analyse de la solution après, mois | | | | | | | | | |
|---|---|---|---|---|---|---|---|---|---|---|---|
| | | 0 | | 1 | | 2 | | 3 | | 4 | |
| | | H202 % | Pertes % | H202 % | Pertes % | H202 % | Pertes % | H202 % | Pertes % | H202 | Pertes % |
| 1R | néant | 34,9 | 0 | 2,0(*) | 94,3 | - | - | - | - | - | - |
| 2R | PYRO | 34,9 | 0 | 24,4 | 30,1 | 18,2 | 47,9 | 13,5 | 61,3 | 10,6 | 69,6 |
| 3R | DPTA | 35,2 | 0 | 2,4 | 93,2 | - | - | - | - | - | - |
| 4R | D2066 | 35,0 | 0 | 32,3 | 7,7 | 27,9 | 20,3 | 24,9 | 28,9 | 20,5 | 41,4 |
| 5R | D2066+PYRO | 34,9 | 0 | 26,7 | 23,5 | 21,4 | 38,7 | 16,5 | 65,1 | 13,5 | 61,3 |
| 6R | STAN | 34,5 | 0 | 29,0 | 15,9 | 24,4 | 29,3 | 21,1 | 38,8 | 16,7 | 51,6 |
| 7 | DPTA+PYRO | 34,9 | 0 | 35,0 | 0 | 35,0 | 0 | 35,4 | 0 | 35,2 | 0 |

(*) après 1 jour

## Tableau II

| N° de l'essai | Nature du stabilisant | Analyse de la solution après, mois | | | | | | | | | |
|---|---|---|---|---|---|---|---|---|---|---|---|
| | | 0 | | 1 | | 2 | | 3 | | 4 | |
| | | H202 % | Pertes % | H202 % | Pertes % | H202 % | Pertes % | H202 % | Pertes % | H202 | Pertes % |
| 8R | néant | 69,9 | 0 | 9,0(*) | 87,1 | - | - | - | - | - | - |
| 9R | PYRO | 69,7 | 0 | 58,7 | 15,8 | 48,3 | 30,7 | 38,0 | 45,5 | 31,1 | 55,4 |
| 10R | DPTA | 70,2 | 0 | 8,4 | 88,0 | - | - | - | - | - | - |
| 11R | D2066 | 70,3 | 0 | 66,5 | 5,4 | 60,2 | 14,4 | 56,0 | 20,3 | 48,9 | 30,4 |
| 12R | D2066+PYRO | 69,7 | 0 | 61,6 | 11,6 | 50,8 | 27,1 | 47,5 | 31,9 | 42,1 | 39,6 |
| 13R | STAN | 70,3 | 0 | 66,7 | 5,1 | 60,2 | 14,4 | 55,4 | 21,2 | 46,6 | 33,7 |
| 14 | DPTA+PYRO | 69,7 | 0 | 69,9 | 0 | 70,2 | 0 | 69,1 | 0,9 | 68,7 | 1,4 |

(*) après 1 jour.

Les résultats montrent clairement l'effet synergique apporté par le DPTA et le PYRO conformes à la solution selon l'invention.

## Revendications

1. Solution aqueuse de peroxyde d'hydrogène stabilisée au moyen d'une composition contenant un stabilisant appartenant à la classe des acides aminopolycarboxyliques, caractérisé en ce que la composition contient un mélange d'un pyrophosphate de métal alcalin ou alcalino-terreux avec un acide aminopolycarboxylique répondant à la formule générale suivante :

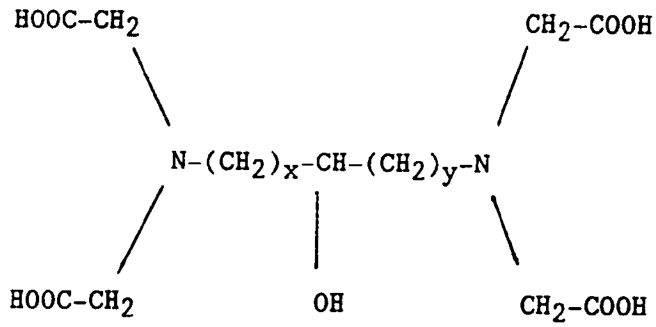

où

x est un nombre entier égal à 0, 1 ou 2 et
y est aussi un nombre entier égal à 0, 1 ou 2;

ou avec un sel de cet acide.

2. Solution selon la revendication 1, caractérisée en ce que x et y sont tels que leur somme ne dépasse pas 3.

3. Solution selon la revendication 1 ou 2, caractérisée en ce que x et y ont la même valeur.

4. Solution selon la revendication 1 ou 2, caractérisée en ce que l'un des nombres x ou y est nul.

5. Solution selon l'une quelconque des revendications 1 à 4, caractérisée en ce que la proportion pondérale de pyrophosphate de métal alcalin ou alcalino-terreux à l'acide aminopolycarboxylique ou l'un de ses sels est comprise entre 0,2 et 4,0.

6. Solution selon la revendication 3, caractérisée en ce que l'acide aminopolycarboxylique est l'acide 1,3-diamino-2-hydroxypropane-N,N,N',N'-tétraacétique.

7. Solution selon l'une quelconque des revendications 1 à 6, caractérisée en ce qu'elle est une solution concentrée commerciale de concentration en poids comprise entre 0,5 et 95 % de peroxyde d'hydrogène.

8. Solution selon l'une quelconque des revendications 1 à 6, caractérisée en ce qu'elle est un bain de lavage ou de blanchiment de textiles.

9. Solution selon l'une quelconque des revendications 1 à 6, caractérisée en ce qu'elle est une liqueur de blanchiment de pâte à papier.

10. Procédé de stabilisation d'une solution aqueuse de peroxyde d'hydrogène au moyen d'une composition contenant un stabilisant appartenant à la classe des acides aminopolycarboxyliques, caractérisé en ce que l'on incorpore à la solution un mélange d'un pyrophosphate de métal alcalin ou alcalino-terreux avec un acide aminopolycarboxylique répondant à la formule générale suivante :

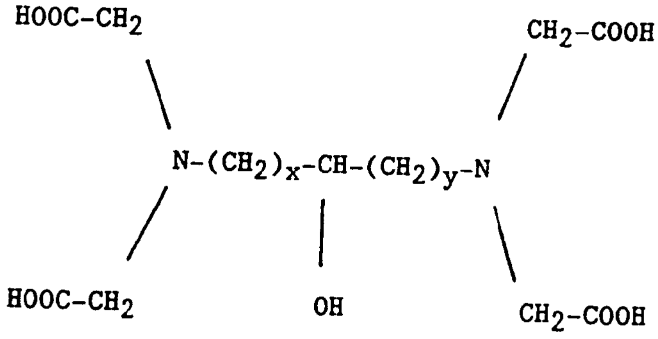

où

x est un nombre entier égal à 0, 1 ou 2 et
y est aussi un nombre entier égal à 0, 1 ou 2;
ou avec un sel de cet acide.

## Claims

1. Aqueous solution of hydrogen peroxide stabilised by means of a composition containing a stabiliser belonging to the category of the aminopolycarboxylic acids, characterised in that the composition contains a mixture of an alkali metal pyrophosphate or alkaline earth metal pyrophosphate with an aminopolycarboxylic acid corresponding to the following general formula:

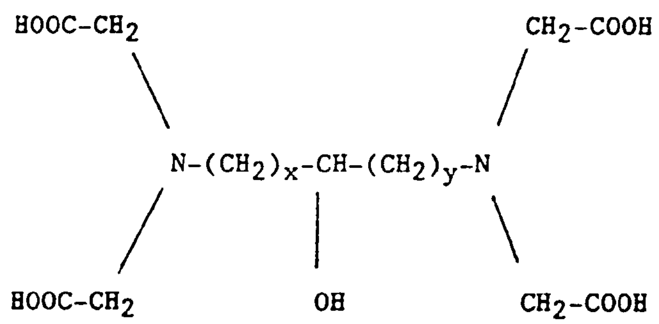

where
x is an integer equal to 0, 1 or 2 and
y is also an integer equal to 0, 1 or 2;
or with a salt of this acid.

2. Solution according to Claim 1, characterised in that x and y are such that their sum is not greater than 3.

3. Solution according to Claim 1 or 2, characterised in that x and y have the same value.

4. Solution according to Claim 1 or 2, characterised in that one of the numbers x or y is zero.

5. Solution according to any one of Claims 1 to 4, characterised in that the proportion by weight of alkali metal or alkaline earth metal pyrophosphate to aminopolycarboxylic acid or one of its salts is between 0.2 and 4.0.

6. Solution according to Claim 3, characterised in that the aminopolycarboxylic acid is 1,3-diamino-2-hydroxypropane-N,N,N',N'-tetraacetic acid.

7. Solution according to any one of Claims 1 to 6, characterised in that it is a commercially available concentrated solution having a concentration by weight of between 0.5 and 95% of hydrogen peroxide.

8. Solution according to any one of Claims 1 to 6, characterised in that it is a washing or bleaching bath for textiles.

9. Solution according to any one of Claims 1 to 6, characterised in that it is a bleaching liquor for paper pulp.

10. Process for stabilising an aqueous solution of hydrogen peroxide by means of a composition containing a stabiliser belonging to the category of the aminopolycarboxylic acids, characterised in that a mixture of an alkali metal pyrophosphate or alkaline earth metal pyrophosphate with an aminopolycarboxylic acid corresponding to the following general formula:

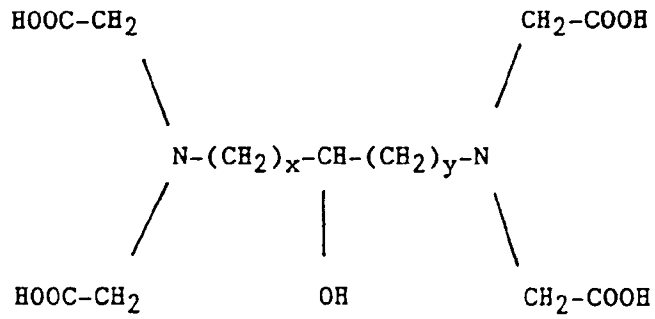

where
x is an integer equal to 0, 1 or 2 and
y is also an integer equal to 0, 1 or 2;
or with a salt of this acid, is incorporated in the solution.

## Patentansprüche

1. Wässrige Wasserstoffperoxidlösung stabilisiert mittels einer Zusammensetzung, die ein zur Klasse der Aminopolycarbonsäuren gehörendes Stabilisierungsmittel enthält, dadurch gekennzeichnet, daß die Zusammensetzung eine Mischung eines Alkalimetall- oder Erdalkalimetall-Pyrophosphats mit einer Aminopolycarbonsäure der folgenden allgemeinen Formel:

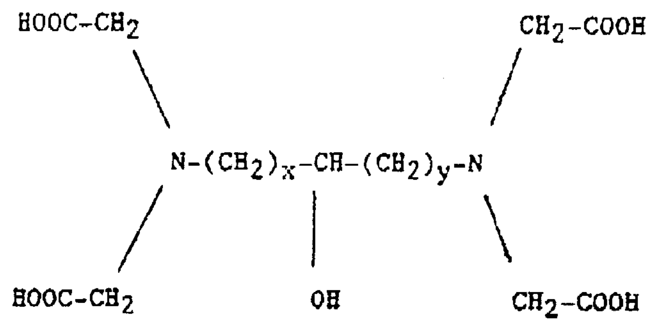

in der
x eine ganze Zahl gleich 0, 1 oder 2 und
y ebenfalls eine ganze Zahl gleich 0, 1 oder 2 ist,
oder mit einem Salz dieser Säure, enthält.

2. Lösung nach Anspruch 1, dadurch gekennzeichnet, daß x und y derart sind, daß ihre Summe nicht größer als 3 ist.

3. Lösung nach Anspruch 1 oder 2, dadurch gekennzeichnet, daß x und y denselben Wert haben.

4. Lösung nach Anspruch 1 oder 2, dadurch gekennzeichnet, daß eine der Zahlen x oder y Null ist.

5. Lösung nach einem der Ansprüche 1 bis 4, dadurch gekennzeichnet, daß das Gewichtsverhältnis von Alkalimetall- oder Erdalkalimetall-Pyrophosphat zu der Aminopolycarbonsäure oder einem ihrer Salze zwischen 0,2 und 4,0 beträgt.

6. Lösung nach Anspruch 3, dadurch gekennzeichnet, daß die Aminopolycarbonsäure die 1,3-Diamino-2-hydroxypropan-N,N,N',N'-tetraessigsäure ist.

7. Lösung nach einem der Ansprüche 1 bis 6, dadurch gekennzeichnet, daß sie eine handelsübliche konzentrierte Lösung ist mit einer Gewichtskonzentration zwischen 0,5 und 95 % von Wasserstoffperoxyd.

8. Lösung nach einem der Ansprüche 1 bis 6, dadurch gekennzeichnet, daß sie ein Wasch- oder Bleichbad für Textilien ist.

9. Lösung nach einem der Ansprüche 1 bis 6, dadurch gekennzeichnet, daß sie eine Bleichflüssigkeit für Papiermasse ist.

10. Verfahren zur Stabilisierung einer wässrigen Wasserstoffperoxydlösung mittels einer Zusammensetzung, die ein zur Klasse der Aminopolycarbonsäuren gehörendes Stabilisierungsmittel enthält, dadurch gekennzeichnet, daß man der Lösung eine Mischung eines Alkalimetall- oder Erdalkalimetall-Pyrophosphats mit einer Aminopolycarbonsäure der folgenden allgemeinen Formel:

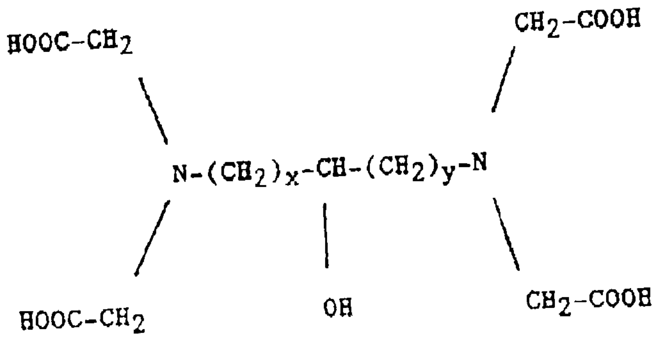

in der
x eine ganze Zahl gleich 0, 1 oder 2 und
y ebenfalls eine ganze Zahl gleich 0, 1 oder 2 ist,
oder mit einem Salz dieser Säure zufügt.